# EUROPEAN PATENT SPECIFICATION

(11) **EP 0 611 515 B1**
(45) Date of publication and mention of the grant of the patent: **08.07.1998**
(21) Application number: 93915983.6
(22) Date of filing: 28.07.1993
(51) Int. Cl.: H04Q 7/20, H04M 3/42

(54) **SHORT MESSAGE PROCESSING IN A MOBILE EXCHANGE**
KURZNACHRICHTVERARBEITUNG IN EINER MOBILVERMITTLUNG
TRAITEMENT DE MESSAGES COURTS DANS UN CENTRAL MOBILE

(30) Priority: 11.08.1992 FI 923597
(43) Date of publication of application: 24.08.1994
(73) Proprietor: NOKIA TELECOMMUNICATIONS OY, 02150 Espoo (FI)
(72) Inventor: SALIN, Hannu-Pekka, FIN-01600 Vantaa (FI)
(74) Representative: Tomlinson, Kerry John
(86) International application number: FI9300305
(87) International publication number: WO9405124

(56) References cited:
- GB-A- 2 244 409
- IEE Colloquium on "GSM and PCN Enhanced Mobile Services", 1991 (London), KEVIN HOLLEY, "The GSM Short Message Service", page 7/1 - page 7/5.
- Recommendation GSM 03.40, "Technical Realization of the Short Message Service - Point-to-Point", version 3.5.0, European Telecommunications Standards Institute, ETSI/PT 12, February 1992; see pp. 10-25, 53-54, 59-64.

## Description

The invention relates to a method for processing a short message received at a mobile exchange in a cellular radio network when the short message is received while a preceding short message is being delivered from the mobile exchange to a B subscriber; and to a mobile exchange in a cellular radio system, comprising a short message delivery means for delivering one short message at a time to a B subscriber; a means for observing the operation of the B subscriber so as to detect the delivery of the short message and to prevent the delivery of another short message when the delivery of the preceding short message is in progress.

It is known in cellular radio networks to send short messages via a short message service centre (SC) separate from the cellular radio network. One system for sending and forwarding short messages is described in GSM 03.40, February 1992, *Technical Realization of Short Message Services Point to Point,* ETSI/PT. The specification describes the interfacing of a short message service centre (SC) to the mobile exchange of a cellular radio network and the operation of the short message service centre when the centre sends and forwards short messages from outside the cellular radio network and from one subscriber (A subscriber) to another (B subscriber) in the cellular radio network, or to an external message means capable of receiving and/or sending short messages. The transfer of short messages over a radio path between GSM terminal equipments, a mobile exchange and a short message service centre is described more closely in GSM 04.11, February 1992, *MS-BSS Interface - Support of Short Message Service (p-p),* ETSI/PT 12.

When the short message service centre attempts to send a short message to the B subscriber, and the B subscriber is not reachable, a message waiting data list is included in the home location register (HLR) in compliance with GSM 03.40. The list stores for each B subscriber the addresses of the short message centres SC storing short messages to be forwarded to the B subscribers. Accordingly, when the B subscriber is connected to the network, i.e. a short message can be sent to the mobile radio of the B subscriber, the visitor location register (VLR) within the area of which the B subscriber is registered sends an indication of the reappearance of the B subscriber in the network to the HLR of the B subscriber. The HLR of the B subscriber thereby starts to send alert messages to the short message service centres included in the subscribers's message waiting data list so as to indicate the short message service centres that the B subscriber has become active within the area of the cellular radio network, and that sending of a short message to the mobile radio of the B subscriber can be attempted. This kind of situation may occur e.g. when the subscriber switches off the mobile radio for the night and then switches it on in the morning, or when the subscriber uses the mobile radio at work and starts it at the beginning of the working hours. Alert messages initiate the sending of the short messages of the B subscriber from the short message service centres over the cellular radio system to the B subscriber. The short message service centre (SC) stores the short messages on the basis of the MSISDN (Mobile Station International PSTN/ISDN Number) cf the B subscriber. However, the short message service centre (SC) does not know if different MSISDN numbers belong to one and the same B subscriber but it may simultaneously start the sending of several short messages to the same B subscriber. Similarly, if a plurality of short message service centres attached to the cellular radio network attempt to deliver short messages to the same B subscriber substantially simultaneously, the mobile exchange associated with the VLR is not able to deliver short messages received after a preceding short message but it has to send a negative acknowledgement to the short message service centre. Collision of short messages at the mobile exchange thus results in the delivery of negative acknowledgement messages to the short message service centre over the cellular radio network. The short message service centre (SC) thereby waits for a predetermined period of time and then again attempts to send the short message. Imagine a situation where the delivery of more than one short messages has been attempted to a B subscriber but the B subscriber has not been currently connected to the cellular radio network. The short messages addressed to the mobile radio of the B subscriber have thus been stored in the memories of different short message service centres to be subsequently delivered to the B subscriber. When the B subscriber then becomes active within the area of the cellular radio network, the HLR of the B subscriber sends alert messages to all short message service centres storing short messages addressed to the B subscriber. All short message service centres thereafter attempt to send, nearly simultaneously, the short messages to the B subscriber. As a result, a short message collision situation occurs at the mobile exchange of the location area of the B subscriber, as the mobile exchange is able to send only one short message at a time. For instance, if ten different short message service centres have attempted to send a short message so that the delivery of the first message (i.e. a preceding message in the claims) from the mobile exchange of the location area to the B subscriber has been in progress, the delivery attempts of the next nine short messages will not be successful. The short message service centres which had delivered the short messages thus receive negative acknowledgements indicating unsuccessful short-message delivery from the mobile exchange of the location area. The nine short message service centres which made the nine unsuccessful short message delivery attempts now send the short messages anew to the mobile exchange of the location area of the B subscriber for delivery to the B subscriber. The first short message (i.e. the preceding message in the claims) will again reach the B subscriber while the eight subsequent messages will not reach the B subscriber but their unsuccessful delivery results in the sending of negative acknowledgements to the respective short message service centres. The above-described situation is further aggravated when more than one mobile radios or terminal equipments to which short message deliveries have been attempted when they were not connected to the network are connected substantially simultaneously to the network. In such a case, when the mobile radios are connected to the cellular radio network, several short message service centres attempt to deliver short messages to the B subscribers, and only a few of the attempts will be successful. Acknowledgements indicating unsuccessful deliveries and redeliveries of the short messages cause a considerable increase in the signalling traffic within the cellular radio network, thus affecting adversely the mobile communication and hampering the operation of the cellular radio network.

The object of the present invention is to avoid the problems caused by substantially simultaneous reception of short messages addressed to the same B subscriber at the mobile exchange and to speed up the delivery of short messages and reduce unnecessary signalling and short message traffic within the cellular radio network.

This new method for processing a short message received at a mobile exchange in a cellular radio network is characterized in that the short message received during the delivery of the preceding short message is stored in a memory and delivered from the mobile exchange to the B subscriber after the completion of the delivery of the preceding short message from the mobile exchange to the B subscriber.

The new mobile exchange according to the invention in a cellular radio network is characterized in that it comprises: a memory means for storing rejected short messages; and a queue control means responsive to the B subscriber operation control means for reading the rejected short message from the memory means so as to initiate the delivery of the short message to the B subscriber when the delivery of the preceding short message is completed.

The invention is based on the idea that the memory of the mobile exchange of the location area of the B subscriber stores short messages the delivery of which to the B subscriber has been unsuccessful as the delivery of a preceding short message to the B subscriber has been in progress when the next short message was received at the mobile exchange.

An advantage of this method for processing a short message received at the mobile exchange of a cellular radio network and the mobile exchange of the cellular radio network is that problems caused by the substantially simultaneous reception of short messages at the mobile exchange are avoided. In other words, the collision of short messages at the mobile exchange of the location area of the B subscriber and, consequently, negative acknowledgements indicating unsuccessful delivery as well as unnecessary signalling and short message traffic are avoided. Accordingly, the use of the method and the mobile exchange according to the invention speeds up the delivery of short messages and reduces the risk of interference caused by the overloading of the cellular radio system.

In the following the invention will be described in greater detail with reference to the attached drawings, in which
Figure 1 is a diagram illustrating a cellular radio system in which the method and the mobile exchange according to the invention are applicable; and
Figure 2 is a block diagram illustrating a mobile exchange according to the invention.

The method according to the invention will be described below in connection with the digital GSM mobile radio system, which is the primary application area of the invention. However, the method according to the invention may also be applied in other radio systems or in the modifications of the GSM system. The basic configuration and basic functions of the GSM mobile radio system are well-known to one skilled in the art and relatively accurately defined in the specifications of the GSM system, particularly: GSM Recommendations 01.02; 11.30; 11.31; 11.32; 03.40.

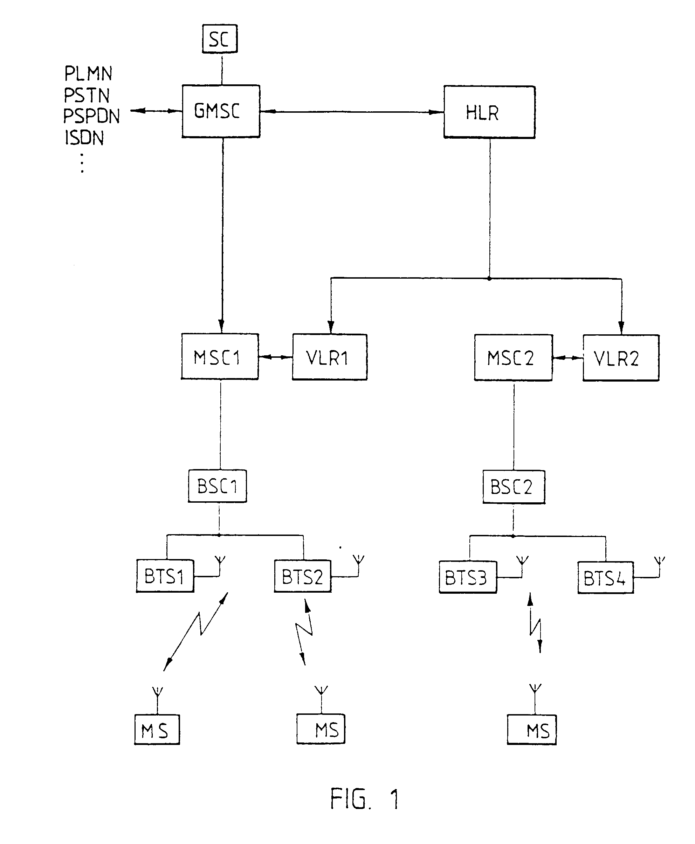

A GSM network, shown in Figure 1, usually comprises a single home location register HLR, which is a database storing permanently the data of the mobile radio, such as location data. The system also contains several visitor location registers VLR, one or more for each service area. The visitor location register VLR is a database storing the data of the mobile radio while the mobile radio visits the area of the VLR, i.e. within the location area of the mobile radio. The VLR knows the location of the mobile radio MS with the accuracy of one location area (LAI). The HLR in turn knows which VLR area the mobile radio MS visits and provides mobile radio terminating calls with routing data to the telephone network i.e. the VLR address of the location area of the B subscriber. The HLR in turn receives the required routing data from the VLR. The HLR and VLR have merely a signalling connection to other components in the mobile radio network. In the system shown in Figure 1, each service area has a dedicated visitor location register VLR connected to the mobile exchange MSC of the respective service area. Figure 1 shows two service areas, one of which comprises a mobile exchange MSC1 and a visitor location register VLR1, while the other comprises a mobile exchange MSC2 and a visitor location register VLR2. Each service area contains one or more location areas (LAI), and traffic is controlled within each location area by a base station controller BSC, which controls several fixed radio stations i.e. base transceiver stations BTS. Each one of the above-mentioned radio cells comprises a single base station BTS, and each base station controller BTC provides services for several cells. A mobile radio MS residing in the cell establishes a two-way radio connection with the base station BTS of the cell. Both a signalling connection and speech channels are established between the base station controller BSC and the mobile exchange MSC. The mobile exchange MSC1 controls the base station controller BSC1, which in turn controls base stations BTS1 and BTS2. Correspondingly, the MSC2 within the other service area controls the location area comprising a base station controller BSC2 and base stations BTS3 and BTS4.

The GSM network is usually connected to other networks, such as a public switched telephone network PSTN, another mobile radio network PLMN, a packet-switched data network PSPDN, an ISDN or a short message service centre SC, via a specific mobile exchange called a gateway-MSC GMSC. One or more (or all) of the mobile exchanges of the network may operate as a GMSC. A speech channel connection can be switched from the GMSC to any other mobile exchange MSC of the network. The GMSC also has a signalling connection with the HLR. The HLR in turn has a signalling connection with the VLRs. Alternatively, the exchange of another data transmission system, such as an ISDN exchange, may also operate as a GMSC. Figure 1 further shows a short message service centre SC which delivers a short message over the cellular radio network to the mobile radio MS.

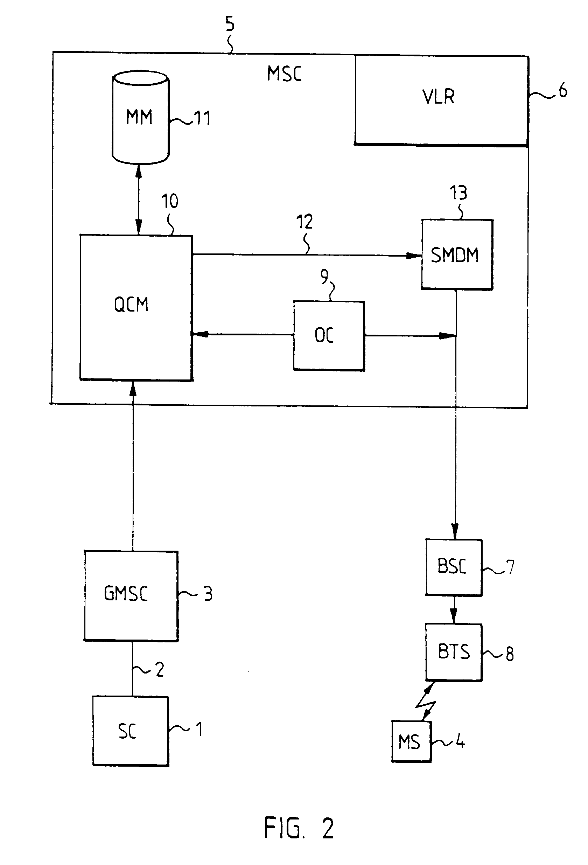

In Figure 2 the short message service centre SC 1 delivers 2 a short message via a GMSC 3 to a mobile exchange MSC 5 of a B subscriber MS 4, a visitor location register VLR 6 of the B subscriber's location area being connected to the MSC 5. The invention is operative in a situation in which a preceding short message is being delivered from the mobile exchange MSC 5 via a base station controller BSC 7 and a base station BTS 8 to the B subscriber MS 4. On receiving the short message the mobile exchange 5 requests the VLR 6 to send routing data for the short message by sending a SendInfoForIncomingCall message. The VLR answers by sending a Page(IMSI, TMSI, LAI) message so as to request the mobile exchange MSC to page the B subscriber within its service area. However, before the paging of the B subscriber, a means OC 9 for controlling the operation of the B subscriber in the mobile exchange 5 detects that there is a radio connection between the B subscriber and the base station 8 of the mobile exchange 5 and that a short message previously received at the mobile exchange is being delivered to the B subscriber 4. The mobile exchange thereby sends a negative acknowledgement PageNack(Busy Subscriber) to the VLR 6 so as to indicate that the B subscriber is busy due to a short message delivery. The VLR answers by sending a negative SendInfoForIncomingCallNack(Impossible Call Completion) acknowledgement. A queue control means QCM 10 provided in the mobile exchange 5 thereby stores the later received, rejected short message in a short message storing means MM 11 where it waits for a repeated delivery. The short message stored in the memory 11 is assigned an identity code, on the basis of which it can be subsequently found in the memory 11. This takes place when the B subscriber operation control means OC 9 detects the completion of the delivery of the preceding short message, and informs the queue control means QCM 10 about it. The QCM 10 reads the rejected short message from the memory means MM 11 and forwards 12 it to a short message delivery means SMDM 13 for further delivery to the mobile radio 4 of the B subscriber via the base station controller 7 and the base station 8. The delivery of the short message to the B subscriber is initiated by calling the short message delivery means SMDM 13 by using its process identity code.

The drawings and the description related to them are only intended to illustrate the idea of the invention. In their details the method for processing a short message received at a mobile exchange in a cellular radio network and the mobile exchange of the cellular radio network according to the invention may vary within the scope of the claims. Even though the invention has been described above mainly with reference to the GSM system it is applicable in other type of radio systems as well.

## Claims

1. Method for processing a short message received at a mobile exchange (MSC) in a cellular radio network when the short message is received while a preceding short message is being delivered from the mobile exchange (MSC) to a B subscriber (4), **characterized** in that the short message received during the delivery of the preceding short message is stored in a memory (11) and delivered from the mobile exchange (MSC) to the B subscriber (MS 4) after the completion of the delivery of the preceding short message from the mobile exchange (MSC) to the B subscriber (MS 4).

2. Method according to claim 1, **characterized** in that the short message received during the delivery of the preceding short message is stored in the memory (11) so that the short message to be stored in the memory (11) is assigned an identity code, and that the short message is searched from the memory (11) on the basis of the identity code and delivered from the mobile exchange (MSC) to the B subscriber after the completion of the delivery of the preceding short message from the mobile exchange (MSC) to the B subscriber (MS).

3. Method according to claim 1 and 2, **characterized** in that the short messages are stored in the memory separately for each subscriber.

4. Mobile exchange (MSC) in a cellular radio system, comprising
- a short message delivery means (13) for delivering one short message at a time to a B subscriber (MS, 4);
- a means (9) for observing the operation of the B subscriber (4) so as to detect the delivery of the short message and to prevent the delivery of another short message when the delivery of the preceding short message is in progress;
**characterized** in that the mobile exchange (MSC) further comprises:
- a memory means (11) for storing rejected short messages; and
- a queue control means (10) responsive to the B subscriber operation control means (9) for reading the rejected short message from the memory means (11) so as to initiate the delivery of the short message to the B subscriber (4) when the delivery of the preceding short message is completed.

5. Mobile exchange according to claim 4, **characterized** in that the delivery of the short message to the B subscriber is initiated by calling the short message delivery means (13) by means of its process identity code.

## Patentansprüche

1. Verfahren zum Verarbeiten einer kurzen Mitteilung, die in einer Mobil-Vermittlungsstelle (MSC) in einem Zellenfunknetz empfangen wird, wenn die kurze Mitteilung empfangen wird, während eine vorangehende kurze Mitteilung von der Mobil-Vermittlungsstelle (MSC) zu einem Teilnehmer B (4) übertragen wird,
dadurch gekennzeichnet,
daß die kurze Mitteilung, die während der Übertragung der vorangehenden kurzen Mitteilung empfangen wird, in einem Speicher (11) gespeichert und von der Mobil-Vermittlungsstelle (MSC) zu dem Teilnehmer B (MS 4) übertragen wird, nachdem die Übertragung der vorangehenden kurzen Mitteilung von der Mobil-Vermittlungsstelle (MSC) zu dem Teilnehmer B (MS 4) beendet ist.

2. Verfahren nach Anspruch 1,
dadurch gekennzeichnet,
daß die kurze Mitteilung, die während der Übertragung der vorangehenden kurzen Mitteilung empfangen wird, derart in dem Speicher (11) gespeichert wird, daß der in dem Speicher (11) zu speichernden kurzen Mitteilung ein Identifizierungscode zugeordnet wird, und daß die kurze Mitteilung auf der Basis des Identifizierungscodes aus dem Speicher (11) herausgesucht und von der Mobil-Vermittlungsstelle (MSC) zu dem Teilnehmer B übertragen wird, nachdem die Übertragung der vorangehenden kurzen Mitteilung von der Mobil-Vermittlungsstelle (MSC) zu dem Teilnehmer B (MS) beendet ist.

3. Verfahren nach Anspruch 1 und 2,
dadurch gekennzeichnet,
daß die kurzen Mitteilungen in dem Speicher separat für jeden Teilnehmer gespeichert werden.

4. Mobil-Vermittlungsstelle (MSC) in einem Zellenfunksystem, das folgendes aufweist:
- eine Einrichtung (13) zum Übertragen einer kurzen Mitteilung, um zu einem Zeitpunkt jeweils eine kurze Mitteilung zu dem Teilnehmer B (MS, 4) zu übertragen; und
- eine Einrichtung (9) zum Beobachten des Betriebes des Teilnehmers B (4), um die Übertragung der kurzen Mitteilung zu detektieren und die Übertragung einer anderen kurzen Mitteilung zu verhindern, wenn die Übertragung der vorangehenden kurzen Mitteilung ihren Fortgang nimmt,
dadurch gekennzeichnet,
daß die Mobil-Vermittlungsstelle (MSC) weiterhin folgendes aufweist:
- eine Speichereinrichtung (11) zum Speichern von zurückgewiesenen kurzen Mitteilungen und
- eine Warteschlangensteuerung (10), die auf die Einrichtung (9) zur Steuerung des Betriebes des Teilnehmers B anspricht, um die zurückgewiesene kurze Mitteilung aus der Speichereinrichtung (11) zu lesen, um die Übertragung der kurzen Mitteilung an den Teilnehmer B (4) einzuleiten, wenn die Übertragung der vorangehenden kurzen Mitteilung beendet ist.

5. Mobil-Vermittlungsstelle nach Anspruch 4,
dadurch gekennzeichnet,
daß die Übertragung der kurzen Mitteilung zu dem Teilnehmer B dadurch eingeleitet wird, daß die Einrichtung (13) zum Übertragen einer kurzen Mitteilung unter Verwendung ihres Verarbeitungs-Identifizierungscodes angerufen wird.

## Revendications

1. Procédé de traitement d'un message court reçu dans un central mobile (MSC) d'un réseau radiotéléphonique cellulaire lorsque le message court est reçu alors qu'un message court précédent est communiqué par le central mobile (MSC) à un abonné B (4),
caractérisé en ce que le message court reçu au cours de la communication du message court précédent est stocké dans une mémoire (11) et communiqué par le central mobile (MSC) à l'abonné B (MS4) une fois que la communication du message court précédent par le central mobile (MSC) à l'abonné B (MS, 4) est terminée.

2. Procédé selon la revendication 1,
caractérisé en ce que le message court reçu au cours de la communication du message court précédent est stocké dans la mémoire (11), de manière à attribuer un code d'identité au message court à stocker dans la mémoire (11), et à ce que le message court soit recherché dans la mémoire (11) sur la base du code d'identité, et communiqué par le central mobile (MSC) à l'abonné B une fois que la communication du message court précédent par le central mobile (MSC) à l'abonné B (MS) est terminée.

3. Procédé selon la revendication 1 et 2,
caractérisé en ce que les messages courts sont stockés dans la mémoire séparément pour chaque abonné.

4. Central mobile (MSC) d'un système radiotéléphonique cellulaire, comprenant :
- un moyen (13) pour communiquer un seul message court à la fois à un abonné B (MS, 4) ;
- un moyen (9) pour contrôler le fonctionnement de l'abonné B (4) en vue de détecter la communication du message court et de prévenir la communication d'un autre message court au cours de la communication du message court précédent,
caractérisé en ce que le central mobile (MSC) comprend en outre :
- un moyen de mémoire (11) pour stocker des messages courts rejetés ; et
- un moyen (10) de commande de la queue, réagissant au moyen (9) de contrôle du fonctionnement de l'abonné B, pour extraire les messages courts rejetés du moyen de mémoire (11) en vue de commencer la communication du message court à l'abonné B (4) lorsque la communication du message court précédent est terminée.

5. Central mobile selon la revendication 4,
caractérisé en ce que la communication du message court à l'abonné B est commencée en appelant le moyen (13) de communication de messages courts au moyen de son code d'identité de traitement.
